# EUROPEAN PATENT APPLICATION

(11) **EP 1 296 264 A2**
(43) Date of publication of application: **26.03.2003**
(21) Application number: 02090332.4
(22) Date of filing: 13.09.2002
(51) Int. Cl.: G06F 17/60, H04Q 3/00, H04M 17/00, H04M 15/00

(54) **Method of rating and charging of postpaid and prepaid subscribers using an intelligent network system**

(30) Priority: 18.09.2001 EP 01250329
(71) Applicant: SIEMENS AKTIENGESELLSCHAFT, 80333 München (DE)
(72) Inventor: Cinotti, Maurizio, 05020 Montecastrilli (IT); Ehle, Wolfgang, 00149 Rom (IT); Jenista, Radim, 272001 Kladno (CZ); Kusy, Viktor, Dr., 26751 Zdice (CZ)

(57) **Abstract**

The invention concerns a method of rating and charging of postpaid and prepaid subscribers wherein both postpaid and prepaid subscribers have a data profile stored in a Intelligent Network system.

## Description

### 1. Technical problem solved by the invention?

The network operators have currently realised the rating functions in a different ways for postpaid and prepaid subscribers. The rating and charging of prepaid subscribers is mostly realised by a Intelligent Networks solution operating a Prepaid Service that executes the rating of the events online. The rating of postpaid subscribers is currently realised by an external billing system off-line, by processing Call Data Records received from the core network. The inconsistency between the rating for prepaid an postpaid subscribers leads to the fact that the network operators have to maintain and synchronise the rating functions on the two separated systems.

### 2. Prior art:

The network operators have to maintain a kind of the rating engine within the billing system which rates the bills for postpaid subscribers periodically and offline. Whenever a network operator would like to introduce a new rating feature independently on the subscription type, e.g. location dependent charging or bonus feature based on an used air-time or a loyalty program, he has to develop these features twice - once for Prepaid subscriber as an IN service feature and secondly for postpaid within the billing system.

### 3. Technical features of the invention:

IN-System Centric Solution for Prepaid and Postpaid Convergent Online Rating is based on the embedding of the existing standardized Siemens IN platform into the billing process chain. The main purpose of the IN platform is to provide a complex IP and GSM online rating module for all the mobile operator's subscribers via one common IN service for all kind of subscribers: the **Universal-Rating Service** (URS).The concept integrates all new and existing mobile operator's subscribers into the IN system by subscribing to the URS service. This means that also the postpaid subscribers will have a data profile stored in the IN system database and whenever they will perform a call the IN system will be envoked.

The Universal-Rating Service is a new IN service combining the online rating, charging and billing functions and achieving the maximal convergence of Prepaid and Postpaid subscribers according to the operator's needs and requirements. There are three types of subscription supported by the URS service:
- **Prepaid subscription** - focused to the existing and future Prepaid customers preferring to pre-pay their call fees.
- **Postpaid-Business subscription** - offering extended service functionality targeted to attract the corporate business customers through the Virtual Private Networks service features.
- **Postpaid-Classical subscription** - focused to the standard GSM Postpaid subscribers.

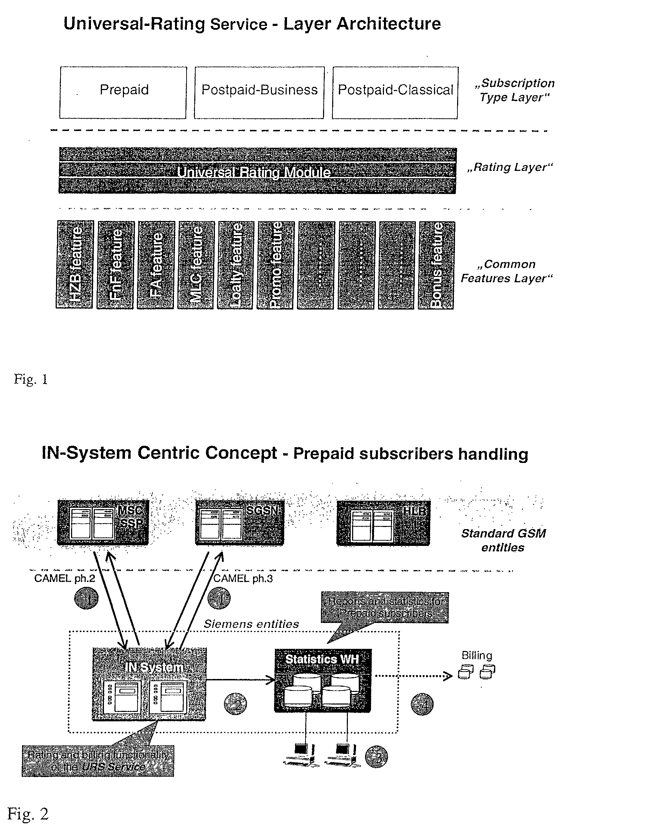

A simplified layer model of the Universal-Rating services is shown in figure 1.

The **"Rating Layer"** is the major layer responsible for providing the tarifing and charging functions. It consists of the Universal Rating Module that executes its own online rating and charging dependent on the subscription type and on the common feature used from the "Common features layer". The Universal Rating Module consists of 3 separated rating modules evoked according to the subscription type:
- **For Prepaid subscribers,** the Universal Rating Module provides the online rating functionality and is enhanced with additional Prepaid service features and specific functionality e.g. online charging.
- **For Postpaid-Business subscribers,** the Universal Rating Module provides the online rating functionality and is extended with additional Virtual Private Networks specific features .
- **For Postpaid-Classical subscribers,** the Universal Rating Module provides the online rating functionality only.

The smooth convergence of Prepaid and Postpaid is achieved in the Universal-Rating Service by introducing the **"Common Features Layer"** integrating all the single rating features e.g. Home Zone Billing feature or Friends@Family feature for all three types of operator's subscribers. This concept then allows the utilizing of one single feature by all types of subscribers with combinations of the subscription specific features integrated into the Rating Layer.

The following paragraphs describe the rating and billing principles realized by the IN system using the Universal Rating Service for the Prepaid subscribers, Postpaid-Business subscribers and Postpaid-Classical subscribers. The goal is to practically illustrate the way in which IN-System Centric Solution for Prepaid and Postpaid Convergent Online Rating deals with particular subscribers and show the consequences from the perspective of the global rating and billing process.

### Prepaid subscribers

From the philosophy of the Prepaid subscription the rating and billing functionality goes for Prepaid subscribers hand in hand and that the billing function is completely realized by the Prepaid online charging functionality integrated within the Universal Rating Service.

The Universal Rating Service provides then a Convergent IP and GSM rating module combined with the billing module realized by the online charging functionality.

A simplified rating and billing handling of the Prepaid subscribers by the IN-System Centric Concept is depicted in figure 2.
- Step 1: Whenever an IN call is detected, the SSP queries the IN system and the execution of the Universal Rating Service is started by the CAP-event "Initial-DP" (IDP, SSP-triggered start). The URS service evaluates the destination of the call, checks the subscribers credit and executes the online GSM rating of the voice call, after that the IN system returns the result to the SSP for further call set-up processing (CON, SSP- connects the B-party) and applies the online charging mechanism. In this case the URS service provides the full rating and billing functionality. The rating itself depends on the call criteria e.g.: time, B destination, usage of any of the common rating features as HZB or FnF and so on. The billing is in this case realized via the online charging functionality so there is no need for generation of tickets for any post-processing.
- Step 1': The same as is described for step 1 applied also for "GPRS call", the only difference is that the standardized messages according to the CAMEL Phase 3 between the IN system and the SGSN are applied. The own processes of rating and billing/online charging are same as for the voice calls described in step 1.
- Step 2:When the call processing is finished, the IN system generates a statistical ticket containing the call and subscriber related information. These tickets are delivered into the Statistics Warehouse for further processing and evaluation. The Statistics Warehouse is a dedicated element for processing and statistical evaluation of service and subscriber/user-related data records. It provides standard reports based on service-independent and service-specific data and offers the possibility of customized statistical evaluations.
- Step 3: Statistics Warehouse also supports comprehensive and efficient project specific queries to the statistical data of the IN system. It can be connected to the service provider's installed operation support system to deliver the raw data for continued support of existing statistical applications and complement them by new evaluations. The reports can be accessed from the Statistics Warehouse via secure intranet connections
- Step 4:Optionally, the Statistics Warehouse can mediate the IN statistic ticket towards the external billing system for further statistical and evaluation purposes.

### - Postpaid subscribers

IN-System Centric Solution for Prepaid and Postpaid Convergent Online Rating represents very powerful IP and GSM rating tool for operator's Postpaid subscribers. The post-processing of the billing information, provided by the IN system, is done by an external billing system The exist two options for the URS services to provide the billing related information. The first option is providing the billing information via the statistic tickets generated by IN system and mediated through the Statistics Warehouse.

The second option for provision of the call and subscriber related billing information is usage the standard CAP billing messages. In this case the IN system initiates the generation of the IN specific calls records within the core networks and filled them by the IN rating data. In either case a post-processing billing system has to be further involved.

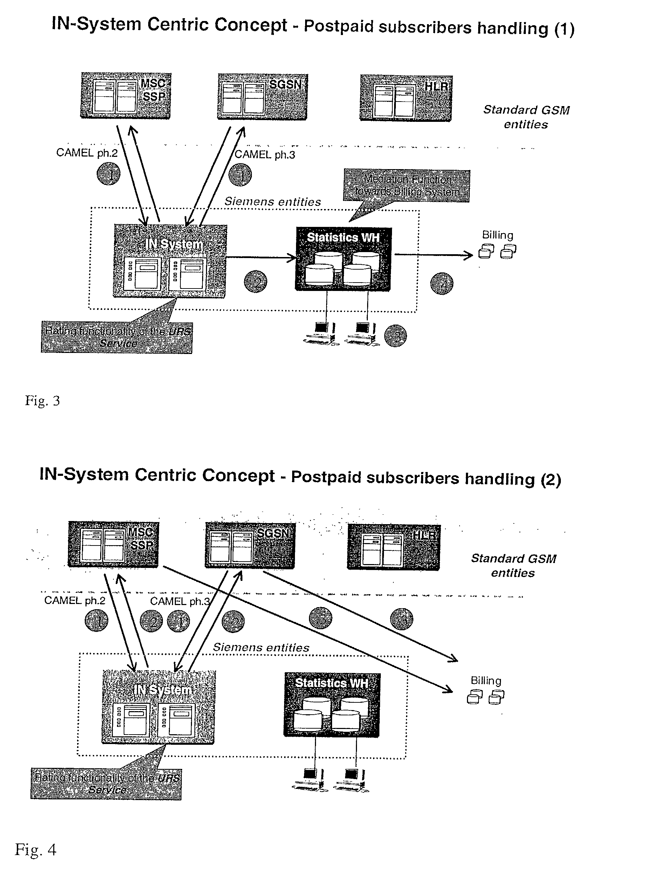

The figures 3 and 4 discuss both options:
**Option1** - providing the billing related information via IN system generated statistical ticket and Statistics Warehouse.
**Option2** - transferring the billing related information from IN system via the standard CAP messages and initializing the Call Data Records generated by core network (MSC, SGSN).

The picture below shows the principle of Postpaid subscriber handling based on the provision of the billing related information via IN system generated statistical ticket and Statistics Warehouse to an external billing system for a post-processing billing activities - **option1**.
- Step 1: Whenever an IN call is detected, the SSP queries the IN system and the execution of the Universal Rating Service is started by the CAP-event "Initial-DP" (IDP, SSP-triggered start) and evaluates the destination of the call and the subscriber's profile. According to this information the URS service checks the assigned call restriction in case of Postpaid Business Subscribers first and then applies the online rating of the call or directly executes the appropriate rating features in case of the Postpaid Classical Subscribers. After that the IN system returns the result to the SSP for further call set-up processing (CON, SSP- connects the B-party) and generates the IN statistic ticket containing the subscriber and call related information necessary for post-processing billing system.
- Step 1': The same as is described for step 1 applied also for a "GPRS call", the only difference is that the standardized messages according to the CAMEL ph3 between the IN system and the SGSN are applied. The own processes of rating and IN statistic tickets generation are same as for the voice calls described in step 1.
- Step 2:As was already indicated in step 1 the IN system generates a statistical ticket containing the call and subscriber related information. These tickets are delivered into the Statistics Warehouse for further processing and evaluation. In this case the Statistics Warehouse filters the IN ticket and mediates them to an external Billing system for post processing (step 4).
- Step 3: Statistics Warehouse also supports comprehensive and efficient specific queries to the statistical data of the IN system. It can be connected to the service provider's installed operation support system to deliver the raw data for continued support of existing statistical applications and complement them by new evaluations. The reports can be accessed from the Statistics Warehouse via secure Intranet connections.
- Step 4:Statistics Warehouse finally mediates the IN statistic ticket towards the external billing system for post-processing billing activities.

The **Option 2** for providing the call and subscriber related billing information for post processing is the transferring the billing related information from IN system via the standard CAP messages and initializing the Call Data Records generated by core network (MSC, SGSN). The Alternative solution assumes that the existing core network entities supports the standardized CAMEL charging operation FurnishedChargingInformation (FCI).

The Call Data Records (IN-AMA tickets) are generated at the SSP (for voice calls) or at the SGSN (for the GPRS calls) under control of the IN system (URS service) that sends the INAP/CAP operation FurnishChargingInformation (FCI). The FCI operation provides information that is written into the IN AMA ticket (e.g. the charged party identification) and requests the SSP to prepare a new IN AMA ticket or update an already existing one.
- Step 1: When an IN call is detected, the SSP queries the IN system and the execution of the Universal Rating Service is started by the CAP-event "Initial-DP" (IDP, SSP-triggered start) and evaluates the destination of the call and the subscriber's profile. According to this information the URS service checks the assigned call restriction in case of Postpaid Business Subscribers first and then applies the online rating of the call or directly executes the appropriate rating features in case of the Postpaid Classical Subscribers
- Step 1' : The same as is described for step 1 applied also for GPRS call, the only difference is that the standardized messages according to the CAMEL ph3 between the IN system and the SGSN are applied. The own process of rating is same as for the voice calls described in step 1.
- Step 2: When the appropriate rating features of the URS service are executed, the IN system returns the result to the SSP for further call set-up processing (CON, SSP-connects the B-party). In this case the CAP "Connect Message" (CON) is armed also with the FCI operation. The FCI operation initiates a generation of a new Call Data Record (IN-AMA ticket) at the MSC which contains the subscriber and call related information necessary for post-processing billing system into the transparent data field.
- Step 2': The same as is described for step 2 applied also for GPRS call, the only difference is that the standardized messages according to the CAMEL ph3 between the IN system and the SGSN are applied.
- Step 3 - 3': As was already mentioned in step 2 (or step 2'), the core network generates a CDR containing the specific rating information provided by the IN system are sends it to an external billing system for further post processing

### 4. Advantages of the invention:

- The concept is based on the existing IN system.
- Every GSM subscriber (Postpaid and Prepaid) is handled by IN system - all the customer information are centralized within this system.
- The Universal Rating Service can operate all the subscribers (Postpaid or Prepaid) by execution of a same rating feature (e.g. HZB) - no need for maintaining an intelligent feature by two separated systems (IN system and Billing system)
- Online rating - all the calls are online triggered into the IN during call set-up and the online rating is assigned.
- No external rating module is necessary any more.

### 5. The features of the invention in summary:

1. An Universal Rating Service for Prepaid and postpaid Convergent Online Rating, is:
   a software running on an existing Intelligent Network platform, that combines the real-time rating, charging and billing functions, allowing to handle Prepaid and Postpaid Mobile subscribers in the same way.
   Universal-Rating Service further including means for allowing convergent rating, charging and billing process for both Prepaid and Postpaid Mobile subscribers.
2. The service recited in sentence 1, evaluating time and date of the call, A and B destination, usage of any of the common rating features (A and B party Location, special B-party destinations), promotion/discount applicability, the subscribers account credit or time-based money thresholds, executes the real-time rating of the call.
3. The main idea behind the concept recited in sentence 2 is to integrate all new and existing mobile operator's subscribers into the IN system by subscribing to the URS service. This means that also the postpaid subscribers will have a data profile stored in the IN system database (an account) and whenever they will perform a call the IN system will be involved.
4. The methods used for obtain the above mentioned aims are:
   For Prepaid subscription the rating and billing functionality is completely realized by the Prepaid real-time charging functionality integrated within the Universal Rating Service.
   For Postpaid subscriptions are existing two options for the URS services to provide the billing related information.
      The first option is providing the billing information via the IN statistic tickets generated by IN system and
      mediated by the device used for statistics evaluation (included in the IN platform).
      The second option for provision of the call and subscriber related billing information is usage the standard CAP billing messages.
      In this case the IN system initiates the generation of the IN specific calls records (CDR) within the core networks and filled them by the IN rating data. For Postpaid subscription a post-processing billing system has to be further involved.

### List of abbreviations used in this description:

- CAMEL: Customized Application for Mobile network Enhanced Logic
- CAP: CAMEL Application Part
- CDR: Call Data Record
- CON: Connect
- FA: Favorite Area
- FCI: Furnish Charging Information
- FnF: Friends and Family
- GPRS: General Packet Radio Services
- GSM: Global System for Mobile communications
- HZB: Home Zone Billing
- IDP: Initial Detection Point
- IN: Intelligent Networks
- IN-AMA: Intelligent Network Automatic Message Accounting
- INAP: Intelligent Network Application Part
- MLC: Mobile Local Call
- MSC: Mobile Switching Center
- PPS: Prepaid Service
- URS: Universal Rating Service
- SGSN: Service GPRS Support Node
- SSP: Service Switching Point

## Claims

1. Method of rating and charging of postpaid and prepaid subscribers using an Intelligent Network system, wherein
- both postpaid and prepaid subscribers have a data profile stored in the Intelligent Network system,
- the Intelligent Network system is invoked when the subscribers perform a call,
- in case the subscriber is a prepaid subscriber type
- the Intelligent Network system invokes a rating module for prepaid subscribers, which performs the rating of the call using a rating feature from a variety of rating features,
- the rating module for prepaid subscribers delivers a prepaid rating result and
- according to this prepaid rating result a billing is realized online within the Intelligent Network system
- in case the subscriber is a postpaid subscriber type
- the Intelligent Network system invokes a rating module for postpaid subscribers, which performs the rating of the call using a rating feature from the variety of rating features,
- the rating module for postpaid subscribers delivers billing information to an external billing system, which realizes the billing according to the billing information.

2. Method according to claim 1, wherein
- in case the subscriber is a postpaid subscriber type
- the Intelligent Network system generates a statistical ticket containing the billing information and delivers the ticket to a Statistics Warehouse, and
- the Statistics Warehouse delivers the tickets to the external billing system.

3. Method according to claim 1, wherein
- in case the subscriber is a postpaid subscriber type
- the Intelligent Network system transfers the billing information to a core network,
- the core network generates a Call Data Record with the billing information and
- the core network sends the Call Data Record to the external billing system.

4. Method according to claim 3, wherein
- the Call Data Record is generated by a mobile switching center.

5. Method according to claim 1 , wherein
- the Intelligent Network system comprises a software, that combines real-time rating, charging and billing functions.

6. Method according to claim 5, wherein
- the Intelligent Network System further includes means for allowing convergent rating, charging and billing processes for both Prepaid and Postpaid Mobile subscribers.

7. Method according to claim 1, wherein
- the rating modules evaluate time and date of the call, A and B destination, usage of any of the rating features, promotion/discount applicability, the subscribers account credit or time-based money thresholds.
